# EUROPÄISCHE PATENTSCHRIFT

(11) **EP 3 275 690 B1**
(45) Veröffentlichungstag und Bekanntmachung des Hinweises auf die Patenterteilung: **05.12.2018**
(21) Anmeldenummer: 17168622.3
(22) Anmeldetag: 28.04.2017
(51) Int. Cl.: B60B 3/00, G09F 3/00, G09F 3/02, G09F 3/06, G09F 3/16, F16B 21/00, G09F 21/04, G09F 3/03, F16B 13/00

(54) **VORRICHTUNG ZUR KENNZEICHNUNG VON RÄDERN**
DEVICE FOR LABELLING OF WHEELS
DISPOSITIF D'IDENTIFICATION DE ROUES

(30) Priorität: 29.07.2016 DE 102016114042; 13.10.2016 DE 202016105732 U
(43) Veröffentlichungstag der Anmeldung: 31.01.2018
(73) Patentinhaber: Varlemann, Walter, 34454 Bad-Arolsen-Landau (DE)
(72) Erfinder: Varlemann, Walter, 34454 Bad-Arolsen-Landau (DE)
(74) Vertreter: Patentanwälte Walther Hinz Bayer PartGmbB

(56) Entgegenhaltungen:
- DE-A1- 3 720 271
- US-A- 4 311 421
- US-A- 5 641 255
- US-B1- 6 239 737

## Beschreibung

Die vorliegende Erfindung betrifft eine Vorrichtung zur Kennzeichnung von Rädern eines Kraftfahrzeugs, wobei die Felge eines Rades mindestens eine Öffnung zur Aufnahme eines Radbolzens aufweist, wobei in die Öffnung die Vorrichtung zur Kennzeichnung einführbar ist. Eine entsprechende Vorrichtung ist aus Dokument DE 3720271 bekannt.

Unter der Kennzeichnung von Rädern wird verstanden, dass zu jedem Rad eine Information über die Lage des Rades am Fahrzeug gegeben wird, also beispielsweise Rad vorne links, Rad hinten rechts, wenn die Räder z. B. beim Reifenhändler eingelagert werden.

Eine weitere bekannte Vorrichtung umfasst einen Kopf mit einer Kennzeichnung für das entsprechende Rad, wobei an dem Kopf in Achsrichtung des Kopfes drei Beine im Winkel von 120° zueinander angeordnet sind, wobei die Beine in die Öffnung zur Aufnahme des Radbolzens einsteckbar sind. Dadurch, dass die Beine winklig nach außen abstehen und einen Umfang beschreiben, der in etwa dem Durchmesser der Öffnung zur Aufnahme des Radbolzens entspricht, wird diese Vorrichtung klemmend durch die Öffnung zur Aufnahme des Radbolzens aufgenommen.

Nachteilig an dieser bekannten Vorrichtung zur Kennzeichnung von Rädern ist, dass beim Einführvorgang dafür gesorgt werden muss, dass die an sich nach außen abstehenden Beine zum Einführvorgang zusammengedrückt werden, was sich diffizil gestaltet, wenn die Person, die mit dem Radwechsel beschäftigt ist, Handschuhe trägt, was üblicherweise der Fall ist. Es hat sich darüber hinaus herausgestellt, dass die Beine bei unachtsamer Handhabung leicht brechen.

Die der Erfindung zugrunde liegende Aufgabe besteht demzufolge darin, eine Vorrichtung der eingangs genannten Art bereitzustellen, die einfacher in der Handhabung und deutlich robuster als die bekannte Vorrichtung zur Kennzeichnung von Rädern ist.

Zur Lösung der Aufgabe wird erfindungsgemäß vorgeschlagen, dass die Vorrichtung ein spreizbares Dübelglied umfasst, wobei das Dübelglied ein Spreizglied zur Spreizung des Dübelgliedes verschiebbar aufnimmt, wobei das Spreizglied und/oder das Dübelglied eine Kennzeichnung aufweist. Das Spreizglied und das Dübelglied werden vormontiert. Das heißt, dass das Spreizglied vor der Montage an der Felge in das Dübelglied eingeschoben wird, sodass das Spreizglied in dem Dübelglied einsitzt, also eine Einheit bildet. Die Kombination oder Einheit aus Dübelglied und Spreizglied wird dann während des Räderwechselvorganges in die Öffnung zur Aufnahme des Radbolzens in der Felge eingesteckt, um dann in einem weiteren Schritt das Spreizglied weiter zum Zwecke der Spreizung in das Dübelglied einzuführen, bis das Dübelglied fest in der Öffnung der Felge für den Radbolzen einsitzt. Die Vormontage des Spreizgliedes in dem Dübelglied bewirkt, dass während des Räderwechsels Personen mit Handschuh das Einführen des Dübelgliedes samt Spreizglied vornehmen können.

Vorteilhafte Merkmale und Ausgestaltungen der Erfindung ergeben sich aus den Unteransprüchen.

So ist insbesondere vorgesehen, dass das Spreizglied einen Kopf, an den sich ein Hals anschließt, zur Aufnahme der Kennzeichnung, also z. B. eine Kennzeichnung mit der Information über die Stellung des Rades am Fahrzeug aufweist, z. B. Rad vorne links oder hinten rechts. Das heißt, dass die Kennzeichnung in schriftlicher Form vorliegen kann. Es ist allerdings auch möglich, eine Kennzeichnung elektronisch, beispielsweise durch einen RFID vorzusehen, wobei dann weitere Informationen auf diesem RFID verzeichnet sein können, wie beispielsweise Halter des Fahrzeuges, Zustand der Räder sowie das Kennzeichen des Fahrzeuges. Auch kann der Ort der Lagerung im Reifenlager auf dem RFID abgespeichert sein.

Nach einem weiteren Merkmal der Erfindung ist vorgesehen, dass die Spreizung des Dübelgliedes abhängig ist von der Eindringtiefe des Spreizgliedes in das Dübelglied. Das heißt, dass während des vormontierten Zustands, wie dies bereits ausgeführt worden ist, das Spreizglied in dem Dübelglied bereits einsitzt, es aber zur Spreizung des Dübelgliedes des weiteren Eindrückens des Spreizgliedes in das Dübelglied bedarf.

In diesem Zusammenhang weist das Dübelglied zur Spreizfähigkeit vorteilhaft mindestens einen sich längs des Dübelgliedes erstreckenden Spreizabschnitt auf, der dafür sorgt, dass hinter dem Felgenmaterial im Bereich der Öffnung zur Aufnahme des Radbolzens das Dübelglied derart gespreizt ist, dass es ohne Herausnahme des Spreizgliedes nicht aus dieser Öffnung herausgezogen werden kann.

Im Zusammenhang mit der Spreizfähigkeit des Dübelgliedes ist des Weiteren vorgesehen, dass im Bereich des mindestens einen Spreizabschnittes mindestens seine Längsnut vorgesehen ist. Insbesondere sind allerdings mehrere, insbesondere zwei Längsnuten vorgesehen, um zwei Spreizabschnitte zu bilden, die einander gegenüberliegen, und somit eine symmetrische Spreizung des Dübelgliedes ermöglichen.

Das Dübelglied weist an seinem offenen Ende bevorzugt einen Außenbund auf; dieser Außenbund soll in seinem Durchmesser so beschaffen sein, dass er nach dem Eindrücken in die Öffnung in der Radfelge gut erfassbar ist, um vor Montage der Radfelge am Fahrzeug leicht herausgezogen werden kann.

Dadurch, dass das Dübelglied an seinem offenen Ende bevorzugt eine Einlaufschräge aufweist, wird das Einführen des Spreizgliedes erleichtert.

Der Hals des Spreizgliedes weist einen Spreizring auf, der in Kontakt mit dem mindestens einen Spreizabschnitt des Dübelgliedes bringbar ist. Der Spreizring ist derart am Hals des Spreizgliedes angeordnet, dass er in einer vormontierten Stellung zu keiner Spreizung des Spreizgliedes führt. Erst in einer weiter eingeschobenen Stellung des Spreizgliedes in das Dübelglied, wird das Dübelglied über einen bestimmten Längenabschnitt gespreizt und verhakt sich in der Öffnung der Felge.

Der Spreizring ist aus fertigungstechnischen Gründen zylindrisch ausgebildet. Der Spreizring weist des Weiteren am unteren Ende eine Einlaufschräge auf, um das Einführen in den Spreizabschnitt des Dübelgliedes zu erleichtern.

Nach einem weiteren Merkmal der Erfindung ist vorgesehen, dass der Hals unterhalb des Kopfes des Spreizgliedes einen Abstandsbund aufweist. Dieser Abstandsbund soll bewirken, dass der Kopf nicht unmittelbar an der Felge anliegt, und so das Spreizglied mit den Fingern besser erfassbar ist.

Vorteilhaft weist das Dübelglied im Bereich des mindestens einen Spreizabschnittes eine zentrische Öffnung zum Durchlass des Halses und hier insbesondere des unteren Endbereichs des Halses des Spreizgliedes auf.

Anhand der Zeichnungen wird die Erfindung beispielhaft näher erläutert.
- Fig. 1: zeigt in einer perspektivischen Darstellung die Vorrichtung zur Kennzeichnung von Rädern eines Kraftfahrzeugs;
- Fig. 2: zeigt eine solche Vorrichtung gemäß Fig. 1 im Schnitt;
- Fig. 3: zeigt einen Schnitt gemäß der Linie III-III aus Fig. 2.

Die insgesamt mit 1 bezeichnete Vorrichtung zur Kennzeichnung von Rädern umfasst das Dübelglied 2 und das Spreizglied 20.

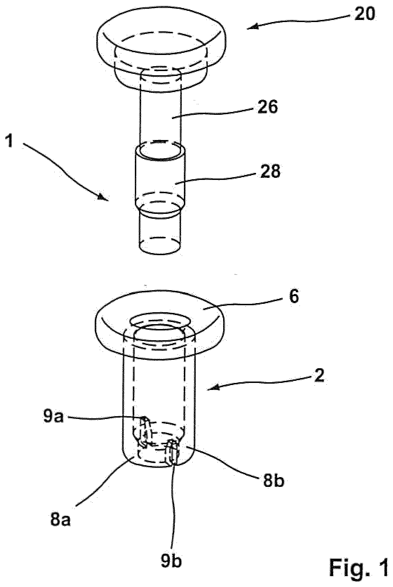

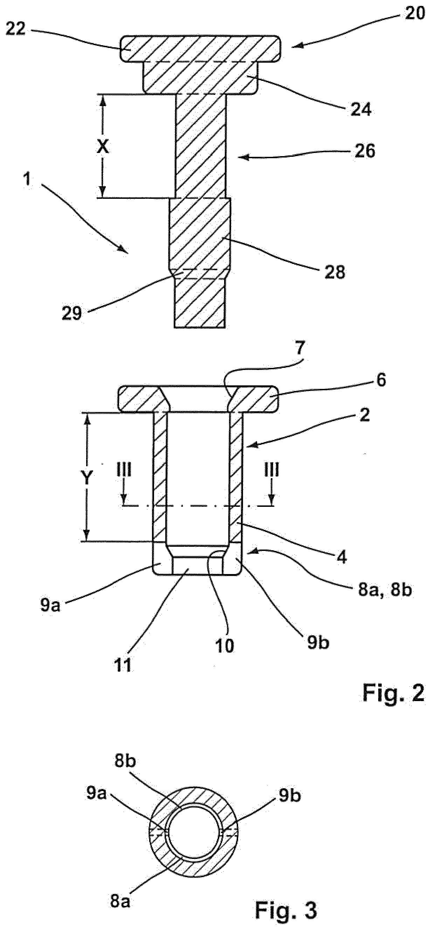

Das Dübelglied 2 weist eine Hülse 4 auf, wobei am oberen Ende der Hülse 4 ein Außenbund 6 angeordnet ist. Der Außenbund 6 weist auf der Innenseite eine Einlaufschräge 7 für das Spreizglied 20 auf. Am unteren Ende der Hülse 4 befinden sich zwei diagonal einander gegenüberliegende Spreizabschnitte 8a und 8b (siehe auch Fig. 1), wobei die Spreizabschnitte 8a und 8b durch zwei Längsnuten 9a und 9b voneinander getrennt sind, wie sich dies anschaulich aus Fig. 3 ergibt. Konzentrisch weist die Hülse 4 im Bereich der beiden Spreizabschnitte 8a und 8b eine Öffnung 11, zum Durchlass des Spreizgliedes 20 auf.

Das mit 20 bezeichnete Spreizglied umfasst einen Kopf 22, auf dem die Kennzeichnung angeordnet ist. Die Kennzeichnung, die nicht dargestellt ist, kann entweder in Form von Schrift aufgetragen sein oder es kann, wie dies bereits erwähnt worden ist, ein RFID in den Kopf mit eingespritzt werden, der eine oder mehrere entsprechende Kennzeichnungen trägt, wie insbesondere die Angabe über die Stellung des Rades am Fahrzeug, das Autokennzeichen, den Halter und den Lagerplatz im Reifenlager. Unterhalb des Kopfes 22 des Spreizgliedes befindet sich der mit 24 bezeichnete Abstandsbund, der dafür sorgt, dass im eingeschobenen Zustand des Spreizgliedes in das Dübelglied der Kopf 22 zum Herausziehen des Spreizgliedes leicht erfassbar ist. An den Abstandsbund schließt sich der Hals 26 des Spreizgliedes an, wobei beabstandet zum Abstandsbund 24 an dem Hals der Spreizring 28 angeordnet ist. Der Spreizring 28 weist nicht nur einen gegenüber dem Durchmesser des Halses erhöhten Durchmesser auf, sondern auch einen gegenüber der Öffnung 11 der Hülse 4 des Dübelgliedes vergrößerten Durchmesser, um die Spreizung der Spreizabschnitte 8a, 8b zu bewirken. Der Abstand X zwischen dem Spreizring 28 einerseits und der Unterseite des Abstandsbunds 24 andererseits ist derart bemessen, dass er etwas geringer ist als der Abstand Y von der Unterseite des Außenbundes 6 bis zu den beiden Spreizabschnitten 8a, 8b des Dübelgliedes 2. Das heißt, der Spreizring muss an dem Hals so lokalisiert sein, dass bei vollständig eingedrücktem Dübelglied die Spreizung der Spreizabschnitte 8a, 8b bewirkt wird. An der Unterseite des Spreizringes 28 befindet sich eine Einlaufschräge 29, die das Einführen des Spreizringes 28 in die beiden Spreizabschnitte 8a, 8b erleichtert. Die Spreizabschnitte 8a, 8b weisen hierbei ebenfalls eine Einlaufschräge 10 auf, um das Einführen des Spreizringes des Spreizgliedes 20 in die Spreizabschnitte zu erleichtern.

Zur Vormontage des Spreizgliedes 20 in dem Dübelglied 2 wird das Spreizglied 20 so weit in das Dübelglied 2 hineingeschoben, bis der Spreizring am oberen Ende der Spreizabschnitte 8a, 8b anliegt, also insbesondere an der Einlaufschräge 10 anliegt. Ist dann insgesamt die Vorrichtung 1 zur Kennzeichnung von Rädern in die Öffnung der Radfelge eingesetzt worden, bis insbesondere der Abstandsbund 24 an der Felge anliegt, dann wird das Spreizglied 20 so weit vorgeschoben, bis der Abstandsbund 24 mit seinem unteren Ende an dem Außenbund 6 des Dübelgliedes anliegt. Jetzt befindet sich der Spreizring 28 im Bereich der Spreizabschnitte 8a, 8b des Dübelgliedes 2, dass heißt, dass nunmehr die Spreizung des Dübelgliedes im Bereich der Spreizabschnitte stattfindet, und so ein fester Sitz der Vorrichtung 1 zur Kennzeichnung von Rädern in der Öffnung zur Aufnahme eines Bolzens in einer Radfelge gewährleistet ist.

### Bezugszeichenliste:

- 1: Vorrichtung
- 2: Dübelglied
- 4: Hülse
- 6: Außenbund
- 7: Einlaufschräge im Außenbund
- 8a: Spreizabschnitt
- 8b: Spreizabschnitt
- 9a: Längsnut
- 9b: Längsnut
- 10: Einlaufschräge im Bereich der Spreizabschnitte
- 11: Öffnung im Bereich der Spreizabschnitte
- 20: Spreizglied
- 22: Kopf des Spreizgliedes
- 24: Abstandsbund
- 26: Hals des Spreizgliedes
- 28: Spreizring
- 29: Einlaufschräge des Spreizringes

## Patentansprüche

1. Vorrichtung (1) zur Kennzeichnung von Rädern eines Kraftfahrzeugs, wobei die Feige eines Rades mindestens eine Öffnung zur Aufnahme eines Radbolzens aufweist, wobei in die Öffnung die Vorrichtung (1) zur Kennzeichnung einführbar ist,
**dadurch gekennzeichnet,**
**dass** die Vorrichtung (1) ein spreizbares Dübelglied (2) umfasst, wobei das spreizbare Dübelglied (2) ein Spreizglied (20) zur Spreizung des Dübelglieds (2) verschiebbar aufnimmt, wobei das Spreizglied (20) und/oder das Dübelglied (2) eine Kennzeichnung aufweist.

2. Vorrichtung (1) nach Anspruch 1,
**dadurch gekennzeichnet,**
**dass** das Spreizglied (20) einen Kopf (22) für die Kennzeichnung aufweist, wobei sich an den Kopf (22) ein Hals (26) anschließt.

3. Vorrichtung (1) nach Anspruch 1 oder 2,
**dadurch gekennzeichnet,**
**dass** die Spreizung des Dübelgliedes (2) abhängig ist von der Eindringtiefe des Spreizgliedes (20) in das Dübelglied (2).

4. Vorrichtung (1) nach einem der voranstehenden Ansprüche,
**dadurch gekennzeichnet,**
**dass** das Dübelglied (2) zur Spreizfähigkeit mindestens einen sich längs des Dübelgliedes (2) erstreckenden Spreizabschnitt (8a, 8b) aufweist.

5. Vorrichtung (1) nach Anspruch 4,
**dadurch gekennzeichnet,**
**dass** im Bereich des mindestens einen Spreizabschnitts (8a, 8b) mindestens eine Längsnut (9a, 9b) vorgesehen ist.

6. Vorrichtung (1) nach einem der voranstehenden Ansprüche,
**dadurch gekennzeichnet,**
**dass** das Dübelglied (2) an seinem oberen Ende einen Außenbund (6) aufweist.

7. Vorrichtung (1) nach einem der voranstehenden Ansprüche,
**dadurch gekennzeichnet,**
**dass** das Dübelglied (2) an seinem oberen Ende eine Einlaufschräge (7) aufweist.

8. Vorrichtung (1) nach einem der voranstehenden Ansprüche 2 bis 7, **dadurch gekennzeichnet,**
**dass** der Hals (26) des Spreizgliedes (20) einen Spreizring (28) aufweist, der in Kontakt mit dem mindestens einen Spreizabschnitt (8a, 8b) des Dübelgliedes (2) bringbar ist.

9. Vorrichtung (1) nach Anspruch 8,
**dadurch gekennzeichnet,**
**dass** der Spreizring (28) zylindrisch ausgebildet ist.

10. Vorrichtung (1) nach einem der Ansprüche 2 bis 9,
**dadurch gekennzeichnet,**
**dass** der Hals (26) des Spreizgliedes (20) unterhalb des Kopfes (22) des Spreizgliedes (20) einen Abstandsbund (24) aufweist.

11. Vorrichtung (1) nach einem der Ansprüche 4 bis 10,
**dadurch gekennzeichnet,**
**dass** das Dübelglied (2) im Bereich der Spreizabschnitte (8a, 8b) eine zentrische Öffnung (11) zum Durchlass des Halses (26) des Spreizgliedes (20) aufweist.

12. Vorrichtung (1) nach einem der voranstehenden Ansprüche,
**dadurch gekennzeichnet,**
**dass** die Kennzeichnung durch eine Markierung auf dem Kopf (22) gebildet ist.

13. Vorrichtung (1) nach einem der voranstehenden Ansprüche,
**dadurch gekennzeichnet,**
**dass** die Kennzeichnung elektronisch durch beispielsweise ein RFID gebildet ist.

## Claims

1. A device (1) for identification of wheels of a motor vehicle, wherein the rim of a wheel comprises at least one opening for receiving a wheel bolt, wherein the device (1) for identification can be introduced into the opening,
**characterised in**
**that** the device (1) comprises a spreadable dowel member (2), wherein the spreadable dowel member (2) receives in a displaceable manner a spreading member (20) for spreading the dowel member (2), wherein the spreading member (20) and/or the dowel member (2) comprises an identification.

2. The device (1) according to claim 1,
**characterised in**
**that** the spreading member (20) comprises a head (22) for identification, wherein a neck (26) is connected to the head (22).

3. The device (1) according to claim 1 or 2,
**characterised in**
**that** the spreading of the dowel member (2) depends on the penetration depth of the spreading member (20) into the dowel member (2).

4. The device (1) according to any one of the preceding claims, **characterised in**
**that** the dowel member (2) for spreadability comprises at least one spreading section (8a, 8b) extending along the dowel member (2).

5. The device (1) according to claim 4,
**characterised in**
**that** in the area of the at least one spreading section (8a, 8b) at least one longitudinal groove (9a, 9b) is provided.

6. The device (1) according to any one of the preceding claims, **characterised in**
**that** the dowel member (2) on its upper end comprises an outer collar (6).

7. The device (1) according to any one of the preceding claims, **characterised in**
**that** the dowel member (2) on its upper end comprises an inlet bevel (7).

8. The device (1) according to any one of the preceding claims 2 to 7, **characterised in**
**that** the neck (26) of the spreading member (20) comprises a spreading ring (28) which can be brought into contact with the at least one spreading section (8a, 8b) of the dowel member (2).

9. The device (1) according to claim 8,
**characterised in**
**that** the spreading ring (28) is cylindrically shaped.

10. The device (1) according to any one of claims 2 to 9,
**characterised in**
**that** the neck (26) of the spreading member (20) below the head (22) of the spreading member (20) comprises a distance collar (24).

11. The device (1) according to any one of claims 4 to 10,
**characterised in**
**that** the dowel member (2) in the area of the spreading sections (8a, 8b) comprises a central opening (11) for passage of the neck (26) of the spreading member (20).

12. The device (1) according to any one of the preceding claims, **characterised in**
**that** the identification is formed by a marking on the head (22).

13. The device (1) according to any one of the preceding claims, **characterised in**
**that** the identification is formed electronically, for example, by an RFID.

## Revendications

1. Dispositif (1) d'identification de roues d'un véhicule, la jante d'une roue comportant au moins une ouverture pour recevoir un boulon de roue, le dispositif (1) d'identification pouvant être introduit dans l'ouverture,
**caractérisé en ce**
**que** le dispositif (1) comprend un élément de cheville (2) écartable, l'élément de cheville (2) écartable recevant de manière *déplaçable* un élément écarteur (20) pour écarter l'élément de cheville (2), l'élément écarteur (20) et/ou l'élément de cheville (2) comportant une identification.

2. Dispositif (1) selon la revendication 1,
**caractérisé en ce**
**que** l'élément écarteur (20) comprend une tête (22) pour l'identification, un col (26) se liant à la tête (22).

3. Dispositif (1) selon la revendication 1 ou 2,
**caractérisé en ce**
**que** l'écartement de l'élément de cheville (2) dépend de la profondeur de pénétration de l'élément écarteur (20) dans l'élément de cheville (2).

4. Dispositif (1) selon l'une quelconque des revendications précédentes,
**caractérisé en ce**
**que** l'élément de cheville (2) pour une capabilité d'écartement comprend au moins une section d'écartement (8a, 8b) s'étendant le long de l'élément de cheville (2).

5. Dispositif (1) selon la revendication 4,
**caractérisé en ce**
**que** dans la zone de l'au moins une section d'écartement (8a, 8b) au moins une rainure longitudinale (9a, 9b) est prévue.

6. Dispositif (1) selon l'une quelconque des revendications précédentes,
**caractérisé en ce**
**que** l'élément de cheville (2) à son extrémité supérieure comprend une collerette extérieure (6).

7. Dispositif (1) selon l'une quelconque des revendications précédentes,
**caractérisé en ce**
**que** l'élément de cheville (2) à son extrémité supérieure comprend une inclinaison d'admission (7).

8. Dispositif (1) selon l'une quelconque des revendications précédentes 2 à 7,
**caractérisé en ce**
**que** le col (26) de l'élément écarteur (20) comprend un anneau écarteur (28) qui peut être mis en contact avec l'au moins une section
d'écartement (8a, 8b) de l'élément de cheville (2).

9. Dispositif (1) selon la revendication 8,
**caractérisé en ce**
**que** l'anneau écarteur (28) est de forme cylindrique.

10. Dispositif (1) selon l'une quelconque des revendications 2 à 9, **caractérisé en ce**
**que** le col (26) de l'élément écarteur (20) comprend une collerette d'espacement (24) en dessous de la tête (22) de l'élément écarteur (20).

11. Dispositif (1) selon l'une quelconque des revendications 4 à 10, **caractérisé en ce**
**que** l'élément de cheville (2) dans la zone des sections d'écartement (8a, 8b) comprend une ouverture centrale (11) pour le passage du col (26) de l'élément écarteur (20).

12. Dispositif (1) selon l'une quelconque des revendications précédentes,
**caractérisé en ce**
**que** l'identification est formée par un marquage sur la tête (22).

13. Dispositif (1) selon l'une quelconque des revendications précédentes,
**caractérisé en ce**
**que** l'identification est formée de manière électronique, par exemple, par un RFID.
